# EUROPEAN PATENT SPECIFICATION

(11) **EP 4 302 244 B1**
(45) Date of publication and mention of the grant of the patent: **02.12.2026**
(21) Application number: 22741638.5
(22) Date of filing: 16.06.2022
(51) Int. Cl.: G06N 20/20, G06N 5/01, G06N 3/09, G06N 3/044, G06N 3/045

(54) **EXPLAINABLE ARTIFICIAL INTELLIGENCE IN COMPUTING ENVIRONMENT**
ERKLÄRBARE KÜNSTLICHE INTELLIGENZ IN EINER COMPUTERUMGEBUNG
INTELLIGENCE ARTIFICIELLE EXPLICABLE AU SEIN D'UN ENVIRONNEMENT INFORMATIQUE

(30) Priority: 22.06.2021 US 202117354392
(43) Date of publication of application: 10.01.2024
(73) Proprietor: Google LLC, Mountain View, CA 94043 (US)
(72) Inventor: CHENG, Xi, Mountain View, CA 94043 (US); YIN, Lisa, Mountain View, CA 94043 (US); LIU, Jiashang, Mountain View, CA 94043 (US); HORMATI, Amir, Hossein, Mountain View, CA 94043 (US); DENG, Mingge, Mountain View, CA 94043 (US); MEYERS, Christopher, Avery, Mountain View, CA 94043 (US)
(74) Representative: Betten & Resch
(86) International application number: PCT/US2022/033822
(87) International publication number: WO 2022/271528

(56) References cited:
- ZEON TREVOR FERNANDO ET AL: "A study on the Interpretability of Neural Retrieval Models using DeepSHAP", ARXIV.ORG, CORNELL UNIVERSITY LIBRARY, 201 OLIN LIBRARY CORNELL UNIVERSITY ITHACA, NY 14853, 15 July 2019 (2019-07-15), XP081442110, DOI: 10.1145/3331184.3331312
- SHUBHAM RATHI: "Generating Counterfactual and Contrastive Explanations using SHAP", ARXIV.ORG, CORNELL UNIVERSITY LIBRARY, 201 OLIN LIBRARY CORNELL UNIVERSITY ITHACA, NY 14853, 21 June 2019 (2019-06-21), XP081379111
- BERTOSSI LEOPOLDO ET AL: "Causality-based Explanation of Classification Outcomes", PROCEEDINGS OF THE FOURTH INTERNATIONAL WORKSHOP ON DATA MANAGEMENT FOR END-TO-END MACHINE LEARNING, ACMPUB27, NEW YORK, NY, USA, 14 June 2020 (2020-06-14), pages 1 - 10, XP058454650, ISBN: 978-1-4503-8023-2, DOI: 10.1145/3399579.3399865

## Description

### CROSS-REFERENCE TO RELATED APPLICATIONS

The present application claims the benefit of the filing date of U.S. Patent Application No. 17/354,392, filed on June 22, 2021.

### BACKGROUND

Machine learning is a field of Artificial Intelligence in which mathematical models are trained using training data to perform a defined task. Data input to a model can include one or more feature values. A feature is a characteristic of the input data, and a feature value is a particular value for the feature for a given input. Machine learning models can be trained using labeled training data and according to a supervised learning technique. Each training example of the training data is labeled with the output the model is being trained to predict, such as a predicted classification or value. The model can be trained to perform a particular task, such as classification or regression, by updating weights based on the difference between a label for an input and the predicted output generated by the model for the same input.

Explainable AI ("XAI") is a class of Artificial Intelligence techniques for explaining why a model generated a particular model output in response to receiving a particular input. Feature attributions are scores generated using XAI and measuring the relative "importance" a particular feature value in the input data has on the value of the model output of the model.

ZEON TREVOR FERNANDO ET AL, "A study on the Interpretability of Neural Retrieval Models using DeepSHAP", ARXIV.ORG, CORNELL UNIVERSITY LIBRARY, 201 OLIN LIBRARY CORNELL UNIVERSITY ITHACA, NY 14853, 15 July 2019, DOI: 10.1145/3331184.3331312, discloses a study on utilizing DeepSHAP to explain NRMs.

SHUBHAM RATHI "Generating Counterfactual and Contrastive Explanations using SHAP", ARXIV.ORG, CORNELL UNIVERSITY LIBRARY, 201 OLIN LIBRARY CORNELL UNIVERSITY ITHACA, NY 14853, 21 June 2019, discloses a model agnostic method and its systemic implementation to generate these explanations using shapely additive explanations (SHAP).

BERTOSSI LEOPOLDO ET AL, "Causality-based Explanation of Classification Outcomes", PROCEEDINGS OF THE FOURTH INTERNATIONAL WORKSHOP ON DATA MANAGEMENT FOR END-TO-END MACHINE LEARNING, ACMPUB27, NEW YORK, NY, USA, 14 June 2020, pages 1-10, DOI: 10.1145/3399579.3399865, ISBN: 978-1-4503-8023-2, discloses a definition of an explanation for the outcome of a classifier based on concepts from causality.

### BRIEF SUMMARY

The invention is defined by the independent claims. Dependent claims define embodiments thereof.

The disclosure is directed to a query-driven machine learning platform for generating feature attributions and other data for interpreting the relationship between inputs and outputs of a machine learning model. The platform can receive query statements for selecting data, training a machine learning model, and generating model explanation data for the model. The platform can distribute processing for generating the model explanation data to scale in response to requests to process selected data, including multiple records with a variety of different feature values. The interface between a user device and the machine learning platform can streamline deployment of different model explainability approaches across a variety of different machine learning models.

Aspects of the disclosure provide for a query-driven computing platform for generating feature attributions and other model explanation data. A computing platform as described herein can maintain tables of input data and model data and can receive query statements selecting the input and model data stored on the platform. The query statements can include parameters specifying variations of different XAI processes implemented as model explainability functions and available on the platform for generating model explanation data. Model explanation data can be used for explaining and/or characterizing the relationships between model input and output data. The query statement syntax received by the platform is model-agnostic, making the platform readily accessible for hosting data and serving queries to generate model explanation data, without requiring special knowledge of the various model explainability functions implemented on the platform. As provided herein, the platform can facilitate model debugging, feature engineering, data collection, and operator decision-making through an interface integrating data selection and processing to create interpretable models. Through the availability of the model explanation data, the platform-driven models can operate in less of a "black-box" manner, without sacrificing user accessibility or depth in user-facing features available on the platform.

Furthermore, the platform is scalable. According to aspects of the disclosure, the platform can implement processing shards maintaining local servers for the duration of time needed to execute received query statements. The local servers can process incoming data according to a variety of different specified model explainability functions, which can be user-selected or automatically provided based on the type of machine learning model received as input. The platform can serve query responses in a distributed and parallel manner, even when the selected data is made up of many table rows potentially having millions of feature values.

An aspect of the disclosure is directed to a system in accordance with independent claim 1.

Another aspect of the disclosure is directed to a computer-implemented method in accordance with independent claim 9.

Another aspect of the disclosure is directed to one or more non-transitory computer-readable storage media in accordance with independent claim 13. Further advantageous aspects of the disclosure are set out in the dependent claims.

### BRIEF DESCRIPTION OF THE DRAWINGS

FIG. 1 is a block diagram of an example machine learning platform, according to aspects of the disclosure.
FIG. 2 is a block diagram of an example computing environment implementing the machine learning platform.
FIG. 3 is a block diagram of a processing shard, according to aspects of the disclosure.
FIG. 4 is a flowchart of an example process for generating feature attributions using the example machine learning platform.
FIG. 5 is a flowchart of an example process for training a machine learning model using feature attributions and the example machine learning platform.
FIG. 6 is a flowchart of an example process for training a machine learning model using global explanation data and the example machine learning platform.
FIG. 7 is a flowchart of an example process for generating global explanation data for a machine learning model.

### DETAILED DESCRIPTION

### Overview:

This disclosure is directed to a query-driven machine learning platform for generating feature attributions and other data for interpreting the relationship between inputs and outputs of a machine learning model. The machine learning platform is configured to interface with one or more devices and receive query statements for selecting data to be processed by a machine learning model hosted on the platform. The machine learning platform can receive and execute query statements of a variety of different types, e.g., Structured Query Language (SQL) statements or other query languages specific to the machine learning platform.

The machine learning platform can receive one or more query statements that cause the machine learning platform to select rows of data maintained in tables of one or more databases stored on the platform, and to process the rows of data through a machine learning model. In addition, the platform can receive, through the one or more query statements, parameters for generating model explanation data. Model explanation data can include local and global explanations. An explanation can be any data that at least partially characterizes a relationship between the output of the model, with either the input data used to generate the model, or with the model itself. Local explainability approaches can include analyzing individual rows of input data. Local explanations are per-input, e.g., per training example for training data, or per individual input for data provided to the model at inference. Global explanations characterize the model as a whole, and can be obtained by aggregating local explanations.

Model explanation data can include feature attributions for different features of input data. A feature attribution of an individual input or training example can correspond to a measure of the degree of "causality" that relates a relative change of the input values to a relative change in the output value.. The machine learning platform can implement any of a variety of different model explanation processes for generating feature attribution data. Feature attributions relating model input and output data can be generated on a global or local level, automatically or in response to parameters provided in the query statements selecting the input data to be processed. The platform can generate feature attributions at model-training time, and store the data for future selection.

Instead of requiring complex input for orchestrating a complex data processing pipeline, which may include several steps for receiving data, training a model, and generating model explanations for the model and/or the received data, the platform provides a uniform interface for selecting input data and receiving model explanation data, making the platform readily accessible for hosting data and serving queries to process the data without requiring special knowledge of different platform-provided model explainability operations.

Through the query-driven interface, the platform can provide access to various state-of-the-art model explainability approaches for direct comparison and feedback, e.g., to a user device. The feedback, available in a variety of different types of global and local explanations as described herein, can be used to iterate subsequent modifications to a model being trained on the platform. For example, model explanation data can be provided by the platform to a user to evaluate whether the model or data needs to be, e.g., debugged or modified to conform to predetermined goals for how the model should be generating output predictions relative to received input. The model explanation data can also reveal sources of major or minor causality in the input data. The platform facilitates comparison between explainability approaches, at least because the query syntax-driven interface allows for rapid modification of parameters or sources of input data available through one or more query statements.

The platform can distribute the performance of operations for generating model explanation data across multiple processing shards, as described herein. Each processing shard can be implemented to process at least a portion of data selected from the received query statements for processing. Each processing shard can launch and maintain a local server to handle generating model explanations as-needed. A local server can maintain one or more explainers configured to process incoming input and model data according to specified approaches and parameters, and can be maintained in memory until the platform has completed serving the source, e.g., a user device, of the received query statements.

### Example Systems

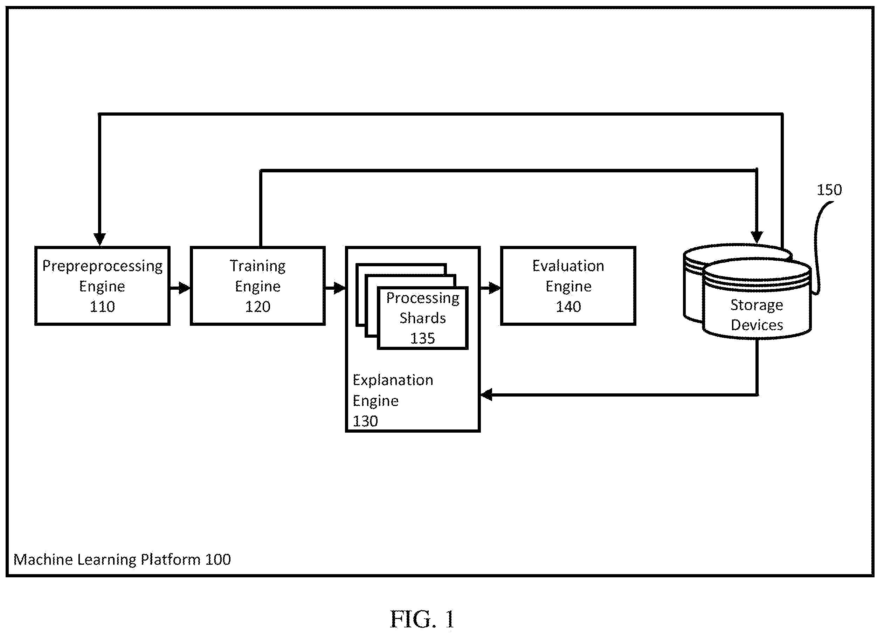

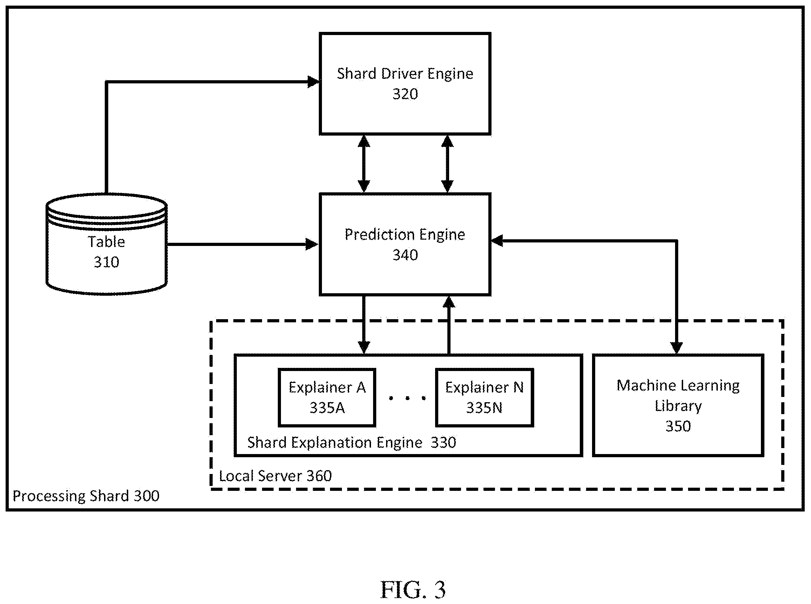

FIG. 1 is a block diagram of an example machine learning platform 100, according to aspects of the disclosure. The platform 100 can include server devices communicating with each other and one or more user devices over a network. In some examples, the platform 100 can implement a preprocessing engine 110, a training engine 120, an explanation engine 130, an evaluation engine 140, and storage devices 150. The platform 100 can also implement one or more processing shards 135 for distributing the computation of model explanation data, described in more detail with reference to FIG. 3. The separation of different platform components configured for performing different operations should not be understood as requiring the components to be separated. The components, modules, programs, and engines described can be integrated together as a single system implementing the platform 100, or be part of multiple systems.

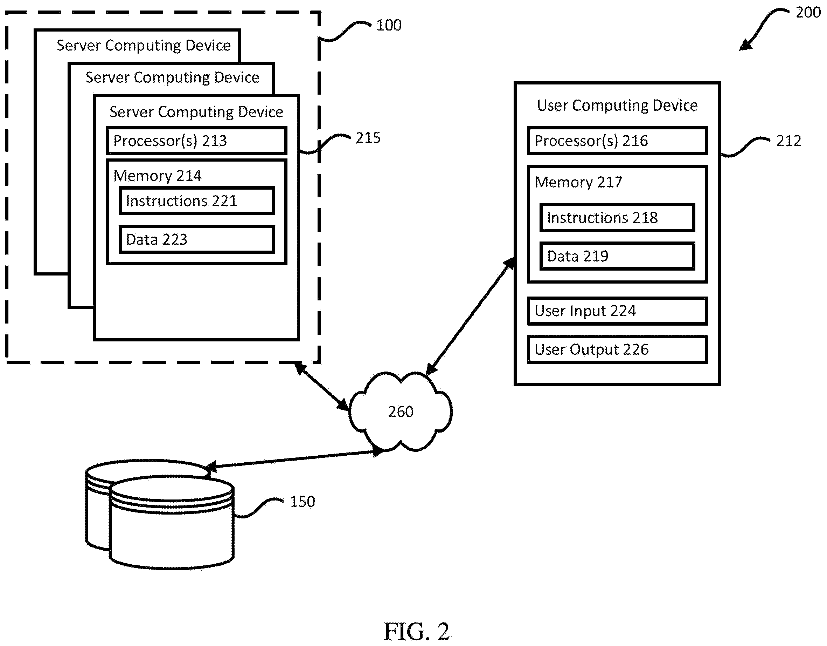

The query statements specify a request for data, e.g., model predictions and/or model predictions and model explanations. As part of requesting the data, the query statements select input and model data, as well as optionally one or more parameters specifying how the platform should train the model, generate predictions for the model, and/or generate model explanation data for the model. The platform 100 can receive one or more query statements selecting rows of data stored in tables on the storage devices 150, and parameters specifying the type of model for processing the data. The platform 100 can be configured to receive the query statements over a network, e.g., as described herein with reference to FIG. 2, and to parse the query statements to determine the nature of the request.

The platform 100 can implement a number of different machine learning models, which the platform 100 can train and process data at inference from data stored on the one or more storage devices 150. Example machine learning models implemented by the platform 100 can include linear models, e.g., linear regression models, logistic regression models; neural networks, including deep neural networks, recurrent neural networks (RNNs), long short-term memory (LSTM) networks, autoencoders, etc.; decision trees; boosted tree models, e.g., for regression and/or classification; and ensembles of models having the same or different architectures, e.g., ensembles of tree-based models and neural networks. Example machine learning techniques that can be implemented by the platform 100 can include k-means clustering, matrix factorization, and principal component analysis. The platform 100 can maintain a library of functions for generating and training models, as well as one or more model explainability functions, e.g., including the ones described here. In some examples, the platform is configured to import data for executing models trained outside of the platform 100.

The platform 100 can implement any of a variety of different learning approaches for training a model, which may be implemented through the training engine 120. Example learning approaches include any processes for training a machine learning model according to supervised, unsupervised, or semi-supervised approaches, including processes for training any of the types of models described herein.

The platform 100 can generate, receive, and store machine learning models as one or more model files and optional metadata, available in any of a variety of different formats, such as JSON. The model files can include code that the platform 100 can process for executing model prediction and model explanation, as described herein. In some examples, the model data represents the machine learning model as a graph of nodes connected by edges. Each node can correspond to some part of the model responsible for processing data, e.g., a neuron in the context of a neural network. Each edge can represent the flow of data to and from one node to another node, e.g., layer inputs and outputs in the context of a neural network.

The preprocessing engine 110 of the platform 100 can be configured for preprocessing data selected from the storage devices 150. For example, preprocessing can include data normalization and formatting to bring the selected data to a form suitable for processing by the training engine 120. The preprocessing engine 110 can also be configured for feature selection/engineering, and/or removing or adding features to the input data according to any of a variety of different approaches. Parameters for feature selection and/or engineering can be received from user input, for example for preprocessing training data before training a model. The preprocessing engine 110 can encode categorical features, e.g., using one-hot encoding, dummy encoding, and/or target coding, etc. In some examples, the preprocessing engine 110 can add embedding layers to a received machine learning model.

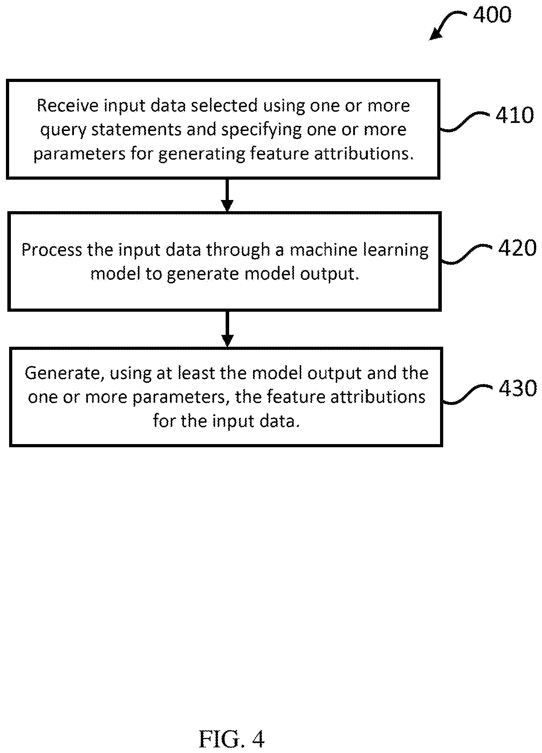

The training engine 120 can be configured to receive training data selected using one or more query statements, and to train a model using the training data. Query statements received by the platform 100 can include parameters specifying the type of machine learning model to train using the training engine 120, as well as hyperparameter values for training the model, e.g., learning rate, number of iterations, etc. Example syntax for the query statements are provided herein, with respect to FIGs. 4-5.

The explanation engine 130 can be configured for generating predictions and/or model explanations in response to query statements received on the platform 100. As described in more detail with reference to FIG. 3, the explanation engine 130 can implement one or more processing shards 135 configured to generate predictions and model explanations from at least portions of the received input data. The explanation engine 130 can distribute portions of input data selected from received query statements to distribute processing. In this way, the explanation engine 130 can scale to handle larger requests, e.g. millions of data points in selected input data, by distributing the input data across multiple processing shards.

The explanation engine 130 can be configured to generate different model explanation data based on the type of machine learning model specified by received input, e.g., as one or more query statements. The model explanation data can include feature attributions, which as described herein the explanation engine 130 can generate to different levels of granularity. The explanation engine 130 can generate feature attributions according to a calculated baseline score, which acts as a basis for comparing the effect different features have on a model's output.

For linear regression and/or logistic regression models, the explanation engine 130 can be configured to generate feature attributions based on the absolute value of the t-statistic for a given feature. The t-statistic is the estimated weight of the feature scaled with its standard error.

For decision trees, in some examples the explanation engine 130 can generate feature attributions based on measures for how each feature contributed to the construction of boosted decision trees within the model. The more a feature is used to make key decisions in the tree, the higher the explanation engine 130 can rate the causality of that feature between changes input and changes in output. The explanation engine 130 can compute the feature attribution explicitly for each feature in a dataset, and output those attributions ordered according to value, e.g., highest to lowest. The feature attribution for a single decision tree can be calculated by the amount that each feature split point improves the performance measure of the decision tree, weighted by the number of observations the node is responsible for.

The explanation engine 130 can also process input data and machine learning models according to one or more model-agnostic approaches, in which the architecture of the model does not matter to the model explainability approach applied. Example approaches include permutation feature importance, partial dependence plots, Shapley values, SHAP (Shapley Additive Explanations), KernelSHAP, TreeSHAP, and integrated gradients. The explanation engine 130 can be configured to use some approaches over others depending on whether the explanation engine 130 is generating local or global explanations. For example, the explanation engine 130 may use permutation feature importance and partial dependence plots for generating global explanations, and Shapley values, SHAP, and integrated gradients for generating both local and global explanations.

The explanation engine 130 can also implement one or more machine learning models trained to generate local and/or global explanations.

The explanation engine 130 can generate the global explanation data in a variety of different ways. For example, for regression models, the mean of the feature attributions across the processed dataset can be calculated as part of the global explanation data. For classification models, the explanation engine 130 can calculate feature attributions for each class and for each input or training example, and then aggregate the feature attributions by calculating the mean absolute value across the attributions.

As another example, instead of the mean absolute value, the explanation engine 130 can compute the root mean square across all feature attributions. One advantage in using the root mean square is the consistency between local and global explanation data for linear models with centered numerical features. The global explanation for these numerical features and for this type of linear model is the absolute value of the model weights. This relationship can provide additional intuition into the relationship between the local and global explanation of the analyzed model. For a feature X, let feature value *xᵢ* be a value of an input *i* to a machine learning model. Also let *x̅* be the mean and *σₓ* be the standard deviation of the feature *X* in the input data. Let *wₓ* be the standardized weight for the feature X in the model, after the model is trained, e.g., by the platform 100. The local attribution of the feature X of the input *i* can be denoted as *fᵢ* and calculated as follows: ${f}_{i} = \left|{w}_{X}-\frac{{x}_{i} - \overline{x}}{{σ}_{x}}\right|$

The explanation engine 130 can aggregate the local attributions for N inputs in the input data, to generate a global attribution for the feature X, for example as follows: ${f}_{X} = \sqrt{\frac{1}{N} {\sum }_{1}^{N} {f}_{i}^{2}} = \sqrt{\frac{1}{N} {\sum }_{1}^{N} {\left({w}_{X}∗\frac{{x}_{i} - \overline{x}}{{σ}_{x}}\right)}^{2}} = {w}_{X}$

The explanation engine 130 can generate global explanations for boosted tree models. In one example, the explanation engine 130 can aggregate SHAP values over local explanations, e.g., feature attributions. In other examples, the explanation engine 130 can generate global explanations using Gini index-based feature importance.

For classification models, the explanation engine 130 can generate a global explanation on a model-level and/or a class-level. Model-level explanations can measure the importance or causality between changes in input and output of a feature across all classes a machine learning model is trained to use in classifying input. Class-level explanations can measure the importance of a feature for a particular class. The explanation engine 130 can be configured to receive input, e.g., as one or more parameters specified in received query statements, specifying whether to generate output on either a model-level and/or a class-level.

For example, when operating to generate model-level explanations, the explanation engine 130 can aggregate feature attributions generated for an input dataset, e.g., training data used to train the machine learning model. As another example, when operating to generate class-level explanations, the explanation engine 130 can be configured to aggregate feature attributions for inputs within the input dataset that were predicted to belong to a particular class by the machine learning model.

For at least some types of models, e.g., boosted trees, the explanation engine 130 can generate feature attributions as a number of metrics. Example metrics include weight, gain, and cover. The weight value for a feature can measure how often a feature appears in a tree split. The gain value is the average information gained from splits including a particular feature. The explanation engine 130 can calculate the total gain by multiplying the feature weight with the gain value. The cover value is a measure of the average number of examples affected by splits including this feature. The explanation engine 130 can calculate the total cover by multiplying the feature weight with the cover value.

The explanation engine 130 is configured to generate feature-level and/or category level attributions for categorical features encoded as vectors, to generate local explanations. Category-level attributions are attributions for each element in a vector encoding categorical features for an input data point or training example. A feature-level attribution is an attribution for the feature generally. In some situations, category-level attributions can be helpful in determining the importance of specific categories relative to a model prediction. The explanation engine 130 can receive one or more parameters specifying whether to generate category-level or feature-level attributions, and/or be predetermined to generate one or both types of attributions automatically. In some examples feature-level attributions may be used over category-level attributions when the cardinality of the categorical features is high, the category names are not labeled and provided as part of the explanation, and/or when the model has been augmented with embedding layers.

The explanation engine 130 can generate feature-level attributions for categorical features by mapping all the categories in each categorical feature, and summing over respective category attributions for each feature. The explanation engine 130 can maintain a mapping between category names and corresponding attributions generated for each category.

In some examples, the explanation engine 130 implements approximated approaches to generating local or global explainability, such as the sampled Shapley method. An approximated approach may be used to reduce the computation resources needed for providing model explanations. In examples in which the explanation engine 130 implements approximated approaches, the explanation engine 130 can receive, e.g., as a predetermined value or through user input, an approximation error representing a tolerance of the discrepancy between the total attribution score and the feature attribution plus the baseline score. The approximation error can be set as a trade-off between accuracy and computational resources-the higher the approximation error the lower the accuracy, but the faster, e.g., in clock cycles, the explanation engine 130 can generate the model explanation data. On the other hand, the approximation error can be set lower for more accurate feature attributions.

The explanation engine 130 can set the approximation error in response to different parameters, which can vary depending on the type of machine learning model being processed. For example, for integrated gradients, the explanation engine can sum the gradients of an output with respect to the input in the networks. The approximation error can be reduced by increasing the number of integral steps in the integral approximation.

Integrated gradients can have the property that the feature attributions sum to the prediction difference between the input score and the baseline score. The approximation error can be the relative deviation between the sum of the feature attributions to the prediction difference between the input score and baseline score and the sum of the approximate feature attributions. The explanation engine 130 can adjust the computation over all possible feature permutations by increasing or decreasing the number of paths for the permutations. In some examples, the explanation engine 130 can receive input to adjust the number of integral steps and/or the number of paths.

The explanation engine 130 can verify whether certain conditions are met for generating certain types of model explanations. For example, the explanation engine 130 can verify whether the input of a model is differentiable with respect to its output, before applying an integrated gradients approach.

The explanation engine 130 is configured to generate a baseline score for generating feature attributions. The difference between the baseline score of a feature and a corresponding feature attribution can be the measure of how much of an impact the value of the feature has on the predicted result generated by the model. The value of the baseline score can vary depending on, for example, the machine learning model and/or the type of the particular feature, e.g., categorical or numerical. The explanation engine 130 can be configured to receive baseline scores for different features, e.g., as part of one or more query statements. In other examples, the explanation engine 130 can generate baseline scores automatically.

For example, for linear models, neural networks, and some ensembles of models, the explanation engine 130 can generate numerical feature baseline scores as the mean of the feature values across the training data. The explanation engine 130 can encode categorical features and set their baseline scores to NULL.

The evaluation engine 140 can receive and provide the model predictions and the model explanations to a user device in response to receiving query statements. The evaluation engine 140 can generate data for rendering the model predictions and/or the model explanations according to any of a variety of different formats, e.g., as text, graphs, charts, etc. The evaluation engine 140 can additionally process the model predictions and the model explanations, e.g., to compute cumulative SHAP values, the first and/or second derivatives of the feature attributions, etc., and output those calculations in addition or as an alternative to the model predictions and model explanations. In some examples, the evaluation engine 140 is configured to sort feature attributions in a model explanation, for example by relative score from highest to lowest importance relative to the model output. In some examples, the evaluation engine 140 can automatically select the top feature attributions that explain some predetermined threshold, e.g., 80%, of the model prediction.

The evaluation engine 140 can implement a graphical user interface, e.g., as one or more web pages, as an application installed on a user device, etc., for presenting and receiving data from a user device. In response to providing the model predictions and model explanations, the evaluation engine 140 can receive additional query statements, e.g., for re-training the model or for generating model explanation data according to different approaches or parameters than what was previously specified. The evaluation engine 140 can provide the model predictions and model explanations to dashboards or applications, e.g., applications running on devices in communication with the platform 100 and relying on the model explanation data and/or model prediction data for its own downstream processing.

Through the user interface provided by the evaluation engine 140, the platform 100 can facilitate debugging and feature engineering in response to providing the model explanation data, at least because the platform can receive query statements that may be easily modified to permute the results of training or generating explanation data for a model. In other words, the platform's query-driven interface allows for on-the-fly changes to any of a variety of different factors, e.g., the data selected for processing, the model trained or processed, and/or the operations performed for generating the model explanation data. These changes can be made without extensive user input for modifying an existing processing pipeline, as opposed to other approaches in which the platform receives user-provided software or other types of input, which may be prone to error if subject to modification.

FIG. 2 is a block diagram of an example environment 200 for implementing the machine learning platform 100. The platform 100 can be implemented, according to aspects of the disclosure not covered by the appended claims, on one or, according to the claimed invention, on more devices having one or more processors in one or more locations, such as, according to aspects of the disclosure not covered by the appended claims, in server computing device 215. It is understood that the machine learning platform 100 can be implemented on multiple server computing devices. User computing device 212 and the server computing device 215 can be communicatively coupled to one or more storage devices 150 over a network 260. The storage device(s) 230 can be a combination of volatile and non-volatile memory, and can be at the same or different physical locations from the computing devices 212, 215. For example, the storage device(s) 150 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 215 can include one or more processors 213 and memory 214. The memory 214 can store information accessible by the processor(s) 213, including instructions 221 that can be executed by the processor(s) 213. The memory 214 can also include data 223 that can be retrieved, manipulated or stored by the processor(s) 213. The memory 214 can be a type of non-transitory computer readable medium capable of storing information accessible by the processor(s) 213, such as volatile and non-volatile memory. The processor(s) 513 can include one or more central processing units (CPUs), graphic processing units (GPUs), field-programmable gate arrays (FPGAs), and/or application-specific integrated circuits (ASICs), such as tensor processing units (TPUs).

The instructions 221 can include one or more instructions that when executed by the processor(s) 213, causes the one or more processors to perform actions defined by the instructions. The instructions 221 can be stored in object code format for direct processing by the processor(s) 213, or in other formats including interpretable scripts or collections of independent source code modules that are interpreted on demand or compiled in advance. The instructions 221 can include instructions for implementing the engines 110-140 and the processing shards 135 of the platform 100, consistent with aspects of this disclosure. The platform 100 can be executed using the processor(s) 213, and/or using other processors remotely located from the server computing device 215.

The data 223 can be retrieved, stored, or modified by the processor(s) 213 in accordance with the instructions 221. The data 223 can be stored in computer registers, in a relational or non-relational database as a table having a plurality of different fields and records, or as JSON, YAML, proto, or XML documents. The data 223 can also be formatted in a computer-readable format such as, but not limited to, binary values, ASCII or Unicode. Moreover, the data 223 can include information sufficient to identify relevant information, such as numbers, descriptive text, proprietary codes, pointers, references to data stored in other memories, including other network locations, or information that is used by a function to calculate relevant data.

The user computing device 212 can also be configured similar to the server computing device 215, with one or more processors 216, memory 217, instructions 218, and data 219. The user computing device 212 can also include a user output 226, and a user input 224. The user input 224 can include any appropriate mechanism or technique for receiving input from a user, such as keyboard, mouse, mechanical actuators, soft actuators, touchscreens, microphones, and sensors.

The server computing device 215 can be configured to transmit data to the user computing device 212, and the user computing device 212 can be configured to display at least a portion of the received data on a display implemented as part of the user output 226. The user output 226 can also be used for displaying an interface between the user computing device 212 and the server computing device 215. The user output 226 can alternatively or additionally include one or more speakers, transducers or other audio outputs, a haptic interface or other tactile feedback that provides non-visual and non-audible information to a user of the user computing device 212.

Although FIG. 2 illustrates the processors 213, 216 and the memories 214, 217 as being within the computing devices 215, 212, components described in this specification, including the processors 213, 216 and the memories 214, 217 can include multiple processors and memories that can operate in different physical locations and not within the same computing device. For example, some of the instructions 221, 218 and the data 223, 219 can be stored on a removable SD card and others within a read-only computer chip. Some or all of the instructions and data can be stored in a location physically remote from, yet still accessible by, the processors 213, 216. Similarly, the processors 213, 216 can include a collection of processors that can perform concurrent and/or sequential operations. The computing devices 215, 212 can each include one or more internal clocks providing timing information, which can be used for time measurement for operations and programs run by the computing devices 515, 512.

The server computing device 215 is configured to receive requests to process data from the user computing device 212. For example, the platform 100 can provide a variety of services to users, through various user interfaces and/or APIs exposing the platform services. One or more services can be a machine learning framework or a set of tools for generating neural networks or other machine learning models according to a specified task and training data. Other services can include training, evaluating, and generating model explanations for one or more machine learning models. The user computing device 212 may receive and transmit data specifying target computing resources to be allocated for executing some or all of these services, which can be implemented for example as part of the engines 110-140.

The devices 212, 215 can be capable of direct and indirect communication over the network 260. The devices 215, 212 can set up listening sockets that may accept an initiating connection for sending and receiving information. The network 260 itself can include various configurations and protocols including the Internet, World Wide Web, intranets, virtual private networks, wide area networks, local networks, and private networks using communication protocols proprietary to one or more companies. The network 260 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 260, in addition or alternatively, can also support wired connections between the devices 212, 215, including over various types of Ethernet connection.

Although a user computing device 212 is shown in FIG. 2, it is understood that the aspects of the disclosure can be implemented according to a variety of different configurations and quantities of computing devices, including in paradigms for sequential or parallel processing, or over a network of multiple distributed devices. In other implementations that are not covered by the appended claims, aspects of the disclosure can be performed on a single device, and any combination thereof.

FIG. 3 is a block diagram of a processing shard 300, according to aspects of the disclosure. The processing shard 300 can include a shard table 310, a shard driver engine 320, a shard explanation engine 330, a prediction engine 340, and a machine learning (ML) library 350. The processing shard 300 can be part of one or more processing shards implemented as part of the explanation engine 130. As described herein, the components of the processing shard 300 can be implemented across multiple processes. A process in this context can refer to data, code, and computing resources, e.g., a processor core, volatile memory, etc., for executing the code using the computing resources and the data. The processing shard 300 can receive at least a portion of input data selected from one or more query statements received by the explanation engine 130, and process the input data in accordance with default or received parameters as part of the received query statements. The platform 100 can configure the one or more processing shards for distributing input data for generating model explanations.

The shard driver engine 320 can be configured to retrieve a portion of the data selected from one or more query statements for processing, e.g., to generate only model predictions or generate both model predictions and model explanation data. Shard table 310 can include one or more tables stored on one or more storage devices, and further include at least a portion of input data selected for processing according to the received query statements. The shard table 310 can also include the table from which the metadata for a trained machine learning model is retrieved from and loaded by the processing shard 300. The shard driver engine 320 can send data and parameters specified in the query statements to the prediction engine 340. The shard driver engine 320 can receive the model prediction and the model explanation from the prediction engine 340 (the latter obtained by the prediction engine 340 from the shard explanation engine 330).

The processing shard 300 loads the model, e.g., from the shard table 310, into memory. The model can be loaded once and reused multiple times, e.g., for generating predictions for different input data, and/or for generating model explanation data for different input data, or for the same input data but according to different XAI approaches. To allow for multiple executions of model prediction and explanation using the prediction engine 340 and the shard explanation engine 330, respectively, the processing shard 300 can launch the shard explanation engine 330 as part of a local server 360 hosted on the same physical server or servers as the processing shard 300. The shard explanation engine 330 and the prediction engine 340 communicate over one or more remote procedure calls, despite the "remote" server being the local server 360. The shard driver engine 320 and the prediction engine can communicate over interprocess communication.

The separation of the shard explanation engine 330 and the machine learning library 350 through the local server 360 allows for independent development between the engine 330 and the library 350, with other components of the processing shard 300, e.g., the prediction engine 340 and the shard driver engine 320. The shard explanation engine 330 and the library 350 can be developed independently, for example at different times and/or in different programming languages, from the prediction engine 340.

As described herein, the shard explanation engine 330 can be loaded in memory by the processing shard 300 for each received query for model explanation, and can remain unloaded until the platform 100 receives query statements specifying requests for model explanation data, as described herein. For example, the processing shard 300 does not keep the shard explanation engine 330 loaded in memory when handling queries to perform model prediction without model explanation. The memory consumption of the platform 100 is reduced by requiring the shard explanation engine 330 to be loaded in memory only when needed to handle query statements involving model explanation.

The prediction engine 340 can be configured to access the portion of the input data assigned to the processing shard 300 from a table specified in one or more received query statements, and to receive model data for the trained model through which the input data is processed. The prediction engine 340 can generate output predictions to the received input data, according to the received machine learning model. The prediction engine 340 can receive user-provided code for executing a trained machine learning model. The prediction engine 340 can generate output predictions according to any of a variety of different formats. For example, the prediction engine 340 can output probabilities for input data processed through a regression model directly, or the prediction engine 340 can output predictions in a transformed format, such as from logits (log-odds) to probabilities for each class predicted in the model output of a classification model.

The prediction engine 340 is configured to execute user code defining a trained machine learning model. As part of executing the user code to generate model predictions, the processing shard 300 can execute the prediction engine 340 in a sandboxed process, to eliminate potential security issues when running the user code. These types of models can include models not trained on the platform 100, but trained elsewhere and imported into the platform 100.

The ML library 350 can include one or more library functions for processing the loaded machine learning model using the prediction engine 340, and/or for generating model explanations using the shard explanation engine 330. As described herein, the ML library 350 is loaded and is executed within the sub-process by the local server 360, as described herein.

The prediction engine 340 can pass the output predictions to the shard explanation engine 330, and the shard explanation engine 330 can be configured to process the output predictions either as probabilities or logits. In some examples, the prediction engine 340 sends output predictions in both formats, while in other examples the prediction engine 340 sends the output predictions in one format, e.g., automatically in response to predetermined or user-provided parameters. In other examples, the shard explanation engine 330 generates model explanation data using output predictions in either format, and the platform 100 can be configured to present model explanation data corresponding to a particular format in response to user input.

The shard explanation engine 330 can be launched on the local server 360 and be configured to run in a sub-process relative to a main process used to execute the prediction engine 340. By running the shard explanation engine 330 as a sub-process, the processing shard 300 can be used to effectively serve requests to only process input data through a machine learning model on the platform, and only launching the local server 360 for the shard explanation engine 330 when receiving a request to generate explanation data for the model.

The local server 360 is configured to be launched each time query statements are received by the processing shard 300 for generating model explanation data and persist in memory until all received input data is processed... The shard driver engine 320 can determine whether to launch the local server 360 or not based at least on whether or not query statements received by the platform specifying parameters for generating model explanation data.

In some examples, the local server 360 can be launched as part of a sub-process that itself is a sub-process of the process executing the shard driver engine 320. For example, the local server 360 can be launched as part of a sub-process to the process executing the prediction engine 340. The processing shard 300 can cause a sub-process to begin to launch the local server 360 in response to receiving a request for generating model explanation data.

In addition, through the use of multiple processing shards, the platform 100 can facilitate servicing requests to generate class-level explanations, for example by partitioning model predictions for each class to a respective one or more processing shards.

To retrieve the model data, the shard explanation engine 330 can receive model data retrieved by the shard driver engine in a serialized format, e.g., using protocol buffers. The model data can be encoded or decoded by the shard explanation engine 330 and/or the shard driver engine 310 as needed to change model data to a format suitable for processing by the shard explanation engine 330. Once received, the shard explanation engine 330 can store the model as one or more memory-mapped files ("memfiles"), allowing the shard explanation engine 330 to access the model data while avoiding issues with cleanup, ownership, privacy, and security potentially raised from maintaining multiple local copies of the model data.

In some examples, the model data may be stored in multiple locations across the one or more storage devices of the platform 100. In those examples, in retrieving the model data, the shard explanation engine 330 is configured to retrieve the individual pieces of the model data stored at the multiple locations, and to reconstruct the pieces in the correct order prior to processing the model as described herein.

The shard explanation engine 330 can execute one or more explainers 335A-N. In FIG. 3, the shard explanation engine 330 is shown as including two explainers A, N 335A, N, although in other examples the shard explanation engine 330 can include fewer or more explainers. An explainer can be implemented in software and/or hardware and be configured to process the machine learning model and input data to generate local or global explanations, for example as described herein with reference to FIG. 1 and the explanation engine 130. The shard explanation engine 330 can receive model data, and from the model data and corresponding parameters, generate each explainer, and generate model explanation data for received input data.

Each explainer is configured to process input data and a machine learning model to generate explanations, in accordance with parameters received as part of one or more query statements. The explainers 335A-N and the input machine learning model can be cached in memory. In some examples, two explainers may implement the same XAI approach, but with different parameters, e.g., two explainers implementing integrated gradients, but with different numbers of integration steps.

### Example Methods

FIG. 4 is a flowchart of an example process 400 for generating feature attributions using the example machine learning platform.

The platform receives input data selected using one or more query statements and specifying one or more parameters for generating feature attributions, according to block 410.

The platform processes the input data through a machine learning model to generate model output, according to block 420. The machine learning model can be trained in response to receiving the one or more query statements. In some examples, the machine learning model is trained prior to receiving the one or more query statements, and the input data corresponds to new data for processing through the model, as opposed to training, validation, and/or evaluation data. In other examples in which the platform trains the models in response to the one or more query statements, the input data for generating model explanations can include the training data used for training the model.

An example query statement for training the machine learning model is shown with reference to TABLE 1, below.

**TABLE 1**

| | |
|---|---|
| 1 | *CREATE OR REPLACE MODEL dataset.boosted_tree* |
| 2 | *OPTIONS(model_type='BOOSTED_TREE_CLASSIFIER', ...") AS* |
| 3 | *SELECT * FROM dataset.input_table* |

On line 1 of TABLE 1, the query statement specifies creating a new model or replacing an existing model from model data specified by the name dataset.boosted_tree. On line 2, the query statement can include a number of options, for example to specify the model type such as a boosted tree classification model represented by the option BOOSTED_TREE_CLASSIFIER. Other options are also available, for example to specify other types of models, or to set parameters for the architecture of selected models, e.g., the number of layers for a deep neural network, or the types of layers or activation functions used in the network, etc. On line 3, the query statement selects all data from a set of data named dataset.input_table. The records of dataset.input_table can include the input data from which the platform generates feature attributions, described below.

The platform generates using at least the model output and the one or more parameters, the feature attributions for the input data, according to block 430. In some examples the platform 100 receives a query statement which causes the platform 100 to process input data to generate predictions from a trained machine learning model, as well as to generate explanation data. An example statement is described with reference to TABLE 2, shown below.

**TABLE 2**

| | |
|---|---|
| 1 | *SELECT * FROMML.EXPLAIN(MODEL dataset. boosted_tree,* |
| 2 | *TABLE dataset.predict_input)* |

On line 1 of TABLE 2, the query statement selects all records from a function ML.EXPLAIN, which receives both a MODEL named dataset.boosted_tree and a TABLE named dataset.predict_input (line 2). The table is the input data, and the result of the platform executing the query statement as in TABLE 2 can include the model prediction generated from processing the input, as well as the model explanation.

TABLE 3 shows an example query statement for generating local explanations for a machine learning model.

**TABLE 3**

| | |
|---|---|
| 1 | SELECT * FROM ML.EXPLAIN (MODEL my_table.my_model, |
| 2 | TABLE table_name \|(query_statement) |
| 3 | {STRUCT(3 AS top_k_features)}); |

The example query statement on lines 1-3 of TABLE 3 is a SELECT statement calling a table-valued function named ML.EXPLAIN. A table-valued function is a function that returns data as a table. The query statement selects all results from the output of the function, which is subject to three parameters. On line 1, a model named my_model is specified from the table my_table. On line 2, the next parameter is a table named table_name or a query statement identified as query_statement that includes the same names and types of columns that the model was trained with. The last parameter, on line 3, is a data structure specifying the option top_k_features. In some examples, some or all of the parameters are optional. The platform 100 can receive a number of different options for configuring how data output from the function ML.EXPLAIN is generated.

The option top_k_features specifies the number of features whose attributions are returned. The features returned can be returned sorted according to the absolute value of their feature attributions. When a number is not provided, the default number of top features returned can be predetermined, e.g., set to the top 5 features. The platform 100 can receive any integer value, up to the maximum number of features in the input data, e.g., so as to not throw an error in attempting to rank the top ten features in input data only including nine features.

Other options are possible, alone or in combination with one another. Another option is top_k_classes, returning the top k classes according to their respective probabilities of occurring as output to input data by the machine learning model. The value can be predetermined, e.g., set to one, or the total number of possible classes the model is configured to classify. The platform 100 can check that the machine learning model is a classification model before executing the function ML.EXPLAIN with this option, to avoid throwing an exception.

Another option is to set a threshold. The threshold can be used to get the predicted label for models implementing binary classification. If the top_k_classes is set to one, the feature attributions output correspond to the predicted class. The default predetermined value can be, for example, 0.5, and the range of inputs can be, for example, real values between 0 and 1. The platform 100 can check that the machine learning model is a binary classification model before executing the function ML.EXPLAIN with this option, to avoid throwing an exception.

Another option is explain_method, used to specify an explanation method for the machine learning model. The platform 100 can check that the explain_method selected is compatible with the selected machine learning model. Each model can have a default explanation method.

Other options include options for specific models and/or specific explain methods. For example, one option can be sample_shapley_num_paths, specifying the number of paths when applying the sampled Shapley method to a model. The default value can equal the total number of features in the input data. Another example is integrated_gradient_num_steps, specifying the number of steps applied in the integrated gradient method. The default value can be, for example, fifty steps.

**In** another example, TABLE 4 shows an example query statement for generating a global explanation for a model.

**TABLE 4**

| | |
|---|---|
| 1 | SELECT * FROM ML.GLOBAL_EXPLAIN (MODEL my _table.my_model, |
| 3 | {STRUCT(TRUE AS class_level_explain); |

In TABLE 4, the function ML.GLOBAL_EXPLAIN has two parameters. The first parameter on line 1 is a machine learning model my _table.my_model. The second parameter is a data structure with the option class_level_explain. As described herein, the platform 100 can generate class level explanations, model level explanations, and feature level explanations, which can be specified through one or more provided options.

As described herein, the platform 100 can output explanations, predicted labels, and/or input data columns. An example regression output is shown with respect to TABLEs 6-8.

**TABLE 6**

| Professional | **Age** | **Education (Years)** | **Hours Worked (Week)** |
|---|---|---|---|
| "software_engineer" | 28 | 10 | 36 |
| "teacher" | 32 | 12 | 40 |

TABLE 6 shows example rows of input data. TABLE 6 includes one categorical feature ("Professional") and three numerical features ("Age," "Education (Years)," "Hours Worked (Week)"). The output to the model can be, for example, a predicted income or predicted job satisfaction given the model input.

For a regression model, the platform 100 can output an example as in TABLEs 7-8.

**TABLE 7**

| **Predicted Label** | **Top Features** | **Feature Attribution** | **Baseline Attribution** | **Total Attribution** | **Error** |
|---|---|---|---|---|---|
| 7.3 | Professional | 2.2 | 3.0 | 7.3 | 0.0 |
| | Age | 1.5 | | | |
| | Hours Worked (Week) | 0.9 | | | |
| | Education (Years) | -0.3 | | | |

TABLE 7 shows a predicted label of 7.3 for the first input in TABLE 6. In addition to the feature attributions, the platform 100 can also output the input data, along with the predicted label. TABLE 7 also shows the baseline attribution (3.0), a total attribution (7.3), and an approximated error.

**TABLE 8**

| **Predicted Label** | **Top Features** | **Feature Attribution** | **Baseline Attribution** | **Total Attribution** | **Error** |
|---|---|---|---|---|---|
| 3.2 | Education (Years) | .2 | 3.0 | 3.2 | 0.0 |
| | Hours Worked (Week) | -0.1 | | | |
| | Age | 0.06 | | | |
| | Professional | 0.04 | | | |

TABLE 8 shows a predicted label of 3.2 for the second input in TABLE 6. For classification models, the platform can output a table as in TABLES 7-8, for each class in the model output predicted. Separate or combined tables can also be returned for local explanations, global explanations, as well as model-level attributions, class-level attributions, feature-level attributions, and category-level attributions.

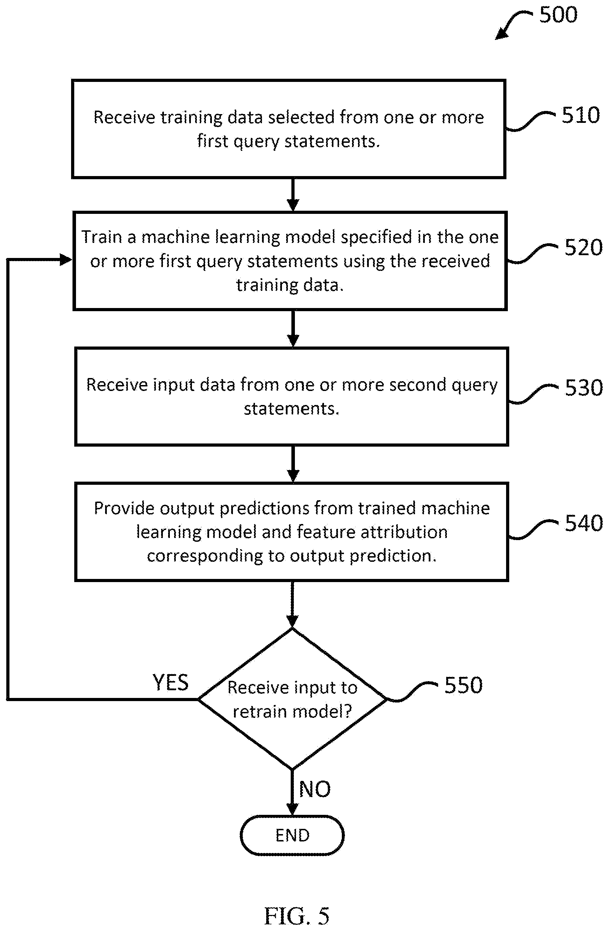

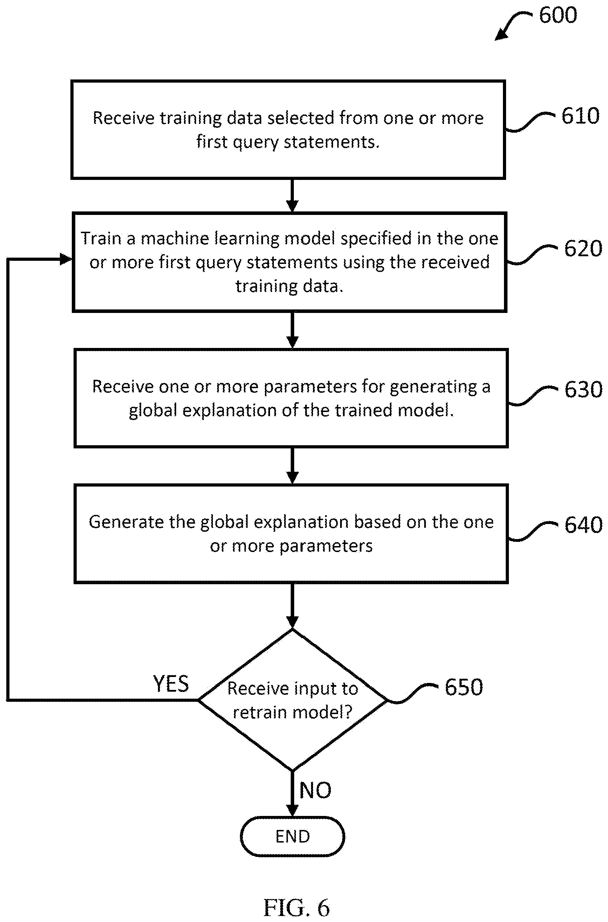

FIGs. 5 and 6 are flowcharts of example processes for generating and providing feature attributions to a requesting user device or other source of query statements. As described herein, the platform facilitates iterative modification of a machine learning model and/or data processed through the model, according to explanations generated by the platform. The processes 500 and 600 of FIGs. 5-6, as well as other processes described herein, can be performed multiple times, for example as part of an interaction between the platform and a requesting user device.

FIG. 5 is a flowchart of an example process 500 for training a machine learning model using local feature attributions and the example machine learning platform.

The platform receives training data selected from one or more first query statements, according to block 510. The one or more first query statements can also specify a model architecture and one or more training parameter values, e.g., hyperparameters such as a learning rate for training the model.

The platform trains a machine learning model specified in the one or more first query statements and using the received trained data, according to block 520. The platform can train the machine learning model according to parameter values in the one or more first query statements.

The platform receives input data from one or more second query statements, according to block 530. The input data can be the training data itself, e.g., for generating global explanation data. The input data can be new data selected using the one or more second query statements. For a trained model, the platform can receive input data for generating new predictions using the model. In some examples, instead of receiving separate query statements and training the model before receiving the one or more second query statements, the platform can receive query statements which cause the platform to both train the model and receive data from the model and cause the platform to process input data through the model to generate a prediction.

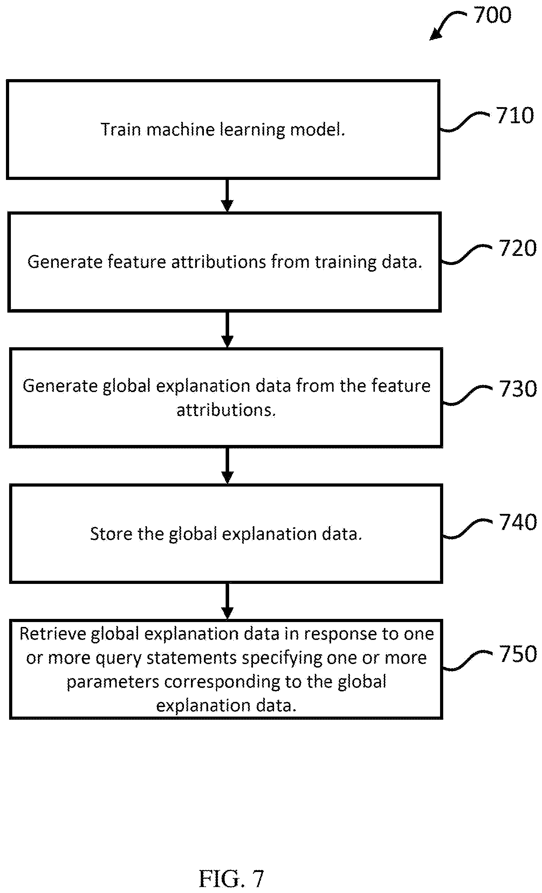

The platform provides output predictions from trained machine learning models and feature attributions corresponding to the output prediction, according to block 540. The platform can generate feature attributions as described herein, with reference to FIGS. 1-3. At least a portion of the generated feature attributions can be stored as metadata corresponding to the model. As described in more detail with reference to FIG. 7, the platform can retrieve previously generated feature attributions and provide the feature attributions to a requesting user device.

The platform determines whether it received input to retrain the machine learning model, according to diamond 550. The received input can be provided from a user device, specifying additional training data and/or the same training data selected using the one or more first query statements. The received input can include query statements specifying modified parameter values for training the model, for example received in response to providing the output predictions and the feature attributions. For example, a user of the platform can specify, through additional query statements, updated training parameter values in response to analyzing the provided feature attributions.

If the platform determines that it received input ("YES"), then the platform retrains the model using the received input, according to block 520. In some examples, in addition or as an alternative to retraining the model, the platform can perform one or more model explainability functions based on the received input. If the platform determines that it has not received input ("NO"), then the process 500 ends.

FIG. 6 is a flowchart of an example process 600 for training a machine learning model using global explanation data and the example machine learning platform.

The platform receives training data selected from one or more first query statements, according to block 610.

The platform trains a machine learning model specified in the one or more first query statements using the received training data, according to block 620.

The platform receives one or more parameters for generating a global explanation of the trained model, according to block 630. In some examples if parameter values are not specified in the one or more first query statements, the platform can generate a global explanation with predefined parameter values, for example based on the type of model being trained.

The platform generates the global explanation based on the one or more parameters, according to block 640. The global explanation can be provided, for example, alongside a confirmation that the model has been trained according to the one or more parameters. The platform can generate a global explanation automatically in response to receiving one or more query statements selecting data for training the model. The global explanation can be stored as part of metadata for the trained model.

In some examples, instead of the training data, the platform can generate the global explanation data from validation or testing data split off from the training data and used to validate and/or test the machine learning model. In some examples, the explanation engine can sample from input data selected from the received query statements, instead of generating feature attributions for each training example or individual data point.

The platform determines whether it received input to retrain the model, according to diamond 650. The platform can receive input for retraining the model similar to receiving the input as described herein with reference to FIG. 5.

FIG. 7 is a flowchart of an example process 700 for generating global explanation data for a machine learning model.

The platform trains a machine learning model, according to block 710. The platform can train the machine learning model in response to received parameter values as described herein with reference to FIG. 1.

The platform generates feature attributions from training data used to train the machine learning model, according to block 720. The platform can generate the feature attributions using any of a variety of approaches as described herein with reference to FIG. 1.

The platform generates global explanation data from the feature attributions, according to block 730. As described herein with reference to FIG. 1, the platform can use any of a variety of aggregation methods for aggregating feature attributions to generate a global explanation of the machine learning model.

The platform stores the global explanation data, according to block 740. The stored global explanation data can be later selected by one or more query statements received by the platform, according to block 740. As described herein with reference to FIG. 3, the platform can train a model and automatically generate a global explanation for a model. If the platform retrains the model, then in some examples the platform can also generate updated global explanation data for the updated model. Because the training data is selected for training the model, the platform can take advantage of the available data to also generate the global explanation for the model. The global explanation can be stored in volatile and/or non-volatile memory.

The platform retrieves global explanation data in response to one or more query statements, according to block 750. Because the global explanation data was generated and stored as part of training the model, the global explanation data can be retrieved by the platform for responding to the one or more query statements, for example by accessing the location(s) in memory where the global explanation was stored. As described herein with reference to FIGs. 1 and 5, in some examples the global explanation can be stored in the metadata for the model.

As described herein, aspects of the disclosure provide for generating model explanations as part of training models and/or processing input data through machine learning models for performing a machine learning task.

As an example, the input to the machine learning model can be in the form of images and/or videos. A machine learning model can be configured to extract, identify, and generate features as part of processing a given input, for example as part of a computer vision task. A machine learning model trained to perform this type of machine learning task can be trained to generate an output classification from a set of different potential classifications. In addition or alternatively, the machine learning model can be trained to output a score corresponding to an estimated probability that an identified subject in the image or video belongs to a certain class.

As another example, the input to the machine learning model can be data files corresponding to a particular format, e.g., HTML files, word processing documents, or formatted metadata obtained from other types of data, such as metadata for image files. A machine learning task in this context can be to classify, score, or otherwise predict some characteristic about the received input. For example, a machine learning model can be trained to predict the probability that received input includes text relating to a particular subject. Also as part of performing a particular task, the machine learning model can be trained to generate text predictions, for example as part of a tool for auto-completion of text in a document as the document is being composed. A machine learning model can also be trained for predicting a translation of text in an input document to a target language, for example as a message is being composed.

Other types of input documents can be data relating to characteristics of a network of interconnected devices. These input documents can include activity logs, as well as records concerning access privileges for different computing devices to access different sources of potentially sensitive data. A machine learning model can be trained for processing these and other types of documents for predicting on-going and future security breaches to the network. For example, the machine learning model can be trained to predict intrusion into the network by a malicious actor.

As another example, the input to a machine learning model can be audio input, including streamed audio, pre-recorded audio, and audio as part of a video or other source or media. A machine learning task in the audio context can include speech recognition, including isolating speech from other identified sources of audio and/or enhancing characteristics of identified speech to be easier to hear. A machine learning model can be trained to predict an accurate translation of input speech to a target language, for example in real-time as part of a translation tool.

In addition to data input, including the various types of data described herein, a machine learning model can also be trained to process features corresponding to given input. A machine learning task in the image/video context can be to classify contents of an image or video, for example for the presence of different people, places, or things. Machine learning models can be trained to extract and select relevant features for processing to generate an output for a given input, and can also be trained to generate new features based on learned relationships between various characteristics of input data.

Aspects of this disclosure can be implemented in digital circuits, computer-readable storage media, as one or more computer programs, or a combination of one or more of the foregoing. The computer-readable storage media can be non-transitory, e.g., as one or more instructions executable by a cloud computing platform and stored on a tangible storage device.

In this specification the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

While operations shown in the drawings are shown in a particular order, it is understood that the operations can be performed in different orders than shown, and that some operations can be omitted, performed more than once, and/or be performed in parallel with other operations, provided this falls within the scope of the invention as defined by the appended claims.

## Claims

1. A system comprising:
one or more memory devices, and
one or more processors, wherein the one or more processors are configured to:
receive (410) input data selected using one or more query statements, the one or more query statements specifying one or more parameters for generating feature attributions corresponding to one or more feature values of the input data;
process (420) the input data through a machine learning model to generate model output; and
generate (430), using at least the model output and the one or more parameters of the one or more query statements, the feature attributions for the input data;
the system **characterized in that** the one or more processors are part of a network of distributed devices, and **in that** in generating the feature attributions, the one or more processors are further configured to:
launch a local server (360) on a same one or more distributed devices of the network of distributed devices, hosting the one or more processors, only when and each time receiving one or more query statements and in response to determining that the received one or more query statements specify the one or more parameters for generating the feature attributions;
persist the local server (360) in a memory of the one or more memory devices until all the input data selected using the one or more query statements are received and processed; and
generate the feature attributions using the local server (360).

2. The system of claim 1, wherein a feature attribution for a respective feature value of the input data corresponds to a value measuring the degree of causality of the feature value relating a relative change of the feature value to a relative change in a value of the model output.

3. The system of claim 1, wherein the one or more parameters specify one or more model explainability functions, and wherein in generating the feature attributions using the local server, the one or more processors are further configured to:
process respective portions of the input data using each of the one or more model explainability functions to generate the feature attributions.

4. The system of claim 1,
wherein in processing the input data through the machine learning model, the one or more processors initialize a first process; and
wherein the one or more processors are further configured to launch a sub-process from the first process to launch the local server and generate the feature attributions; and optionally
wherein the one or more query statements are one or more first query statements and the feature attributions are first feature attributions; and
wherein the one or more processors are further configured to:
receive one or more second query statements;
determine, from the one or more second query statements, that the one or more second query statements comprise one or more second parameters for generating second feature attributions; and
launch the sub-process from the first process to launch the local server and generate the second feature attributions in response to the determination that the one or more second query statements comprise the one or more second parameters for generating the second feature attributions.

5. The system of claim 1, wherein the input data comprises one or more inputs, each input corresponding to a row of a database stored on the one or more memory devices selected using the one or more query statements; and/or
wherein the input data is training data or validation data used to train the machine learning model; and/or
wherein the one or more query statements are one or more Structured Query Language, SQL, statements.

6. The system of claim 1,
wherein the one or more processors are further configured to train the machine learning model, and
wherein the one or more query statements select data for processing through the trained machine learning model to generate one or more model predictions.

7. The system of claim 1,
wherein the feature attributions are first feature attributions; and
wherein the one or more processors are further configured to:
generate second feature attributions for training data used to train the machine learning model;
generate global feature attributions for the trained machine learning model, wherein in generating the global feature attributions the one or more processors are configured to aggregate the second feature attributions; and
store, in the one or more memory devices, the global feature attributions; and
wherein in generating the first feature attributions, the one or more processors are configured to receive at least a portion of the stored global feature attributions.

8. The system of claim 1, wherein the one or more processors are further configured to output the feature attributions for display on a display device coupled to the one or more processors.

9. A computer-implemented method comprising:
receiving (410), by one or more processors, input data selected using one or more query statements, the one or more query statements specifying one or more parameters for generating feature attributions corresponding to one or more feature values of the input data;
processing (420), by the one or more processors, the input data through a machine learning model to generate model output; and
generating (430), by the one or more processors and using at least the model output and the one or more parameters of the one or more query statements, the feature attributions for the input data;
the method **characterized in that** the one or more processors are part of a network of distributed devices, and **in that** generating the feature attributions comprises:
launching, by the one or more processors, a local server (360) on a same one or more distributed devices of the network of distributed devices, hosting the one or more processors, only when and each time receiving one or more query statements and in response to determining that the received one or more query statements specify the one or more parameters for generating the feature attributions;
persisting, by the one or more processors, the local server (360) in a memory of one or more memory devices until all the input data selected using the one or more query statements are received and processed; and
generating, by the one or more processors, the feature attributions using the local server (360).

10. The method of claim 9, wherein a feature attribution for a respective feature value of the input data corresponds to a value measuring the degree of causality of the feature value relating a relative change of the feature value to a relative change in the output value a value of the model output.

11. The method of claim 9,
wherein the method further comprises training the machine learning model, and
wherein the one or more query statements select data for processing through the trained machine learning model to generate one or more model predictions.

12. The method of claim 9,
wherein the feature attributions are first feature attributions; and
wherein the method further comprises:
generating, by the one or more processors, second feature attributions for training data used to train the machine learning model;
generating , by the one or more processors, global feature attributions for the trained machine learning model, wherein in generating the global feature attributions the one or more processors are configured to aggregate the second feature attributions; and
storing, by the one or more processors, in one or more memory devices, the global feature attributions; and optionally
wherein generating the first feature attributions comprises receiving, by the one or more processors, at least a portion of the stored global feature attributions.

13. One or more non-transitory computer-readable storage media encoded with instructions that, when executed by one or more processors, cause the one or more processors to perform operations comprising:
receiving (410) input data selected using one or more query statements, the one or more query statements specifying one or more parameters for generating feature attributions corresponding to one or more feature values of the input data;
processing (420) the input data through a machine learning model to generate model output; and
generating (430), using at least the model output and the one or more parameters of the one or more query statements, the feature attributions for the input data;
the one or more non-transitory computer-readable media **characterized in that** the one or more processors are part of a network of distributed devices, and **in that** generating the feature attributions comprises:
launching, by the one or more processors, a local server (360) on a same one or more distributed devices of the network of distributed devices, hosting the one or more processors, only when and each time receiving one or more query statements and in response to determining that the received one or more query statements specify the one or more parameters for generating the feature attributions;
persisting, by the one or more processors, the local server (360) in a memory of one or more memory devices until all the input data selected using the one or more query statements are received and processed; and
generating, by the one or more processors, the feature attributions using the local server (360).

14. The computer-readable storage media of claim 13, wherein, optionally, a feature attribution for a respective feature value of the input data corresponds to a value measuring the degree of importance the respective feature value has in generating the model output.

## Patentansprüche

1. System, umfassend:
eine oder mehrere Speichervorrichtungen, und
einen oder mehrere Prozessoren, wobei der eine oder die mehreren Prozessoren konfiguriert sind zum:
Empfangen (410) von Eingabedaten, die unter Verwendung einer oder mehrerer Abfrageanweisungen ausgewählt werden, wobei die eine oder die mehreren Abfrageanweisungen einen oder mehrere Parameter zum Erzeugen von Merkmalsattributierungen angeben, die einem oder mehreren Merkmalswerten der Eingabedaten entsprechen;
Verarbeiten (420) der Eingabedaten durch ein Maschinenlernmodell, um eine Modellausgabe zu erzeugen; und
Erzeugen (430), unter Verwendung mindestens der Modellausgabe und des einen oder der mehreren Parameter der einen oder der mehreren Abfrageanweisungen, der Merkmalsattributierungen für die Eingabedaten;
wobei das System **dadurch gekennzeichnet ist, dass** der eine oder die mehreren Prozessoren Teil eines Netzwerks von verteilten Vorrichtungen sind, und dadurch, dass beim Erzeugen der Merkmalsattributierungen der eine oder die mehreren Prozessoren ferner konfiguriert sind zum:
Starten eines lokalen Servers (360) auf derselben einen oder denselben mehreren verteilten Vorrichtungen des Netzwerks von verteilten Vorrichtungen, die den einen oder die mehreren Prozessoren hosten, nur wenn und jedes Mal beim Empfangen einer oder mehrerer Abfrageanweisungen und als Reaktion auf ein Bestimmen, dass die empfangene eine oder die empfangenen mehreren Abfrageanweisungen den einen oder die mehreren Parameter zum Erzeugen der Merkmalsattributierungen angeben;
Aufrechterhalten des lokalen Servers (360) in einem Speicher der einen oder der mehreren Speichervorrichtungen, bis all die Eingabedaten, die unter Verwendung der einen oder der mehreren Abfrageanweisungen ausgewählt werden, empfangen und verarbeitet sind; und
Erzeugen der Merkmalsattributierungen unter Verwendung des lokalen Servers (360).

2. System nach Anspruch 1, wobei eine Merkmalsattributierung für einen jeweiligen Merkmalswert der Eingabedaten einem Wert entspricht, der den Grad an Kausalität des Merkmalswerts misst, der eine relative Änderung des Merkmalswerts mit einer relativen Änderung eines Werts der Modellausgabe in Beziehung setzt.

3. System nach Anspruch 1, wobei der eine oder die mehreren Parameter eine oder mehrere Modellerklärbarkeitsfunktionen angeben, und wobei beim Erzeugen der Merkmalsattributierungen unter Verwendung des lokalen Servers der eine oder die mehreren Prozessoren ferner konfiguriert sind zum:
Verarbeiten von jeweiligen Abschnitten der Eingabedaten unter Verwendung jeder der einen oder der mehreren Modellerklärbarkeitsfunktionen, um die Merkmalsattributierungen zu erzeugen.

4. System nach Anspruch 1,
wobei beim Verarbeiten der Eingabedaten durch das Maschinenlernmodell der eine oder die mehreren Prozessoren einen ersten Prozess initialisieren; und
wobei der eine oder die mehreren Prozessoren ferner konfiguriert sind, um einen Teilprozess von dem ersten Prozess zu starten, um den lokalen Server zu starten und die Merkmalsattributierungen zu erzeugen; und gegebenenfalls
wobei die eine oder die mehreren Abfrageanweisungen eine oder mehrere erste Abfrageanweisungen sind und die Merkmalsattributierungen erste Merkmalsattributierungen sind; und
wobei der eine oder die mehreren Prozessoren ferner konfiguriert sind zum:
Empfangen einer oder mehrerer zweiter Abfrageanweisungen;
Bestimmen, aus der einen oder den mehreren zweiten Abfrageanweisungen, dass die eine oder die mehreren zweiten Abfrageanweisungen einen oder mehrere zweite Parameter zum Erzeugen von zweiten Merkmalsattributierungen umfassen; und
Starten des Teilprozesses von dem ersten Prozess, um den lokalen Server zu starten und die zweiten Merkmalsattributierungen zu erzeugen, als Reaktion auf das Bestimmen, dass die eine oder die mehreren zweiten Abfrageanweisungen den einen oder die mehreren zweiten Parameter zum Erzeugen der zweiten Merkmalsattributierungen umfassen.

5. System nach Anspruch 1, wobei die Eingabedaten eine oder mehrere Eingaben umfassen, wobei jede Eingabe einer Zeile einer Datenbank entspricht, die auf der einen oder den mehreren Speichervorrichtungen gespeichert ist, die unter Verwendung der einen oder der mehreren Abfrageanweisungen ausgewählt wird; und/oder
wobei die Eingabedaten Trainingsdaten oder Validierungsdaten sind, die verwendet werden, um das Maschinenlernmodell zu trainieren; und/oder
wobei die eine oder die mehreren Abfrageanweisungen eine oder mehrere Structured-Query-Language-, SQL-, Anweisungen sind.

6. System nach Anspruch 1,
wobei der eine oder die mehreren Prozessoren ferner konfiguriert sind, um das Maschinenlernmodell zu trainieren, und
wobei die eine oder die mehreren Abfrageanweisungen Daten zum Verarbeiten durch das trainierte Maschinenlernmodell auswählen, um eine oder mehrere Modellvorhersagen zu erzeugen.

7. System nach Anspruch 1,
wobei die Merkmalsattributierungen erste Merkmalsattributierungen sind; und
wobei der eine oder die mehreren Prozessoren ferner konfiguriert sind zum:
Erzeugen von zweiten Merkmalsattributierungen für Trainingsdaten, die verwendet werden, um das Maschinenlernmodell zu trainieren;
Erzeugen von globalen Merkmalsattributierungen für das trainierte Maschinenlernmodell, wobei beim Erzeugen der globalen Merkmalsattributierungen der eine oder die mehreren Prozessoren konfiguriert sind, um die zweiten Merkmalsattributierungen zu aggregieren; und
Speichern, in der einen oder den mehreren Speichervorrichtungen, der globalen Merkmalsattributierungen; und
wobei beim Erzeugen der ersten Merkmalsattributierungen der eine oder die mehreren Prozessoren konfiguriert sind, um zumindest einen Abschnitt der gespeicherten globalen Merkmalsattributierungen zu empfangen.

8. System nach Anspruch 1, wobei der eine oder die mehreren Prozessoren ferner konfiguriert sind, um die Merkmalsattributierungen zur Anzeige auf einer Anzeigevorrichtung auszugeben, die mit dem einen oder den mehreren Prozessoren gekoppelt ist.

9. Computerimplementiertes Verfahren, umfassend:
Empfangen (410), durch einen oder mehrere Prozessoren, von Eingabedaten, die unter Verwendung einer oder mehrerer Abfrageanweisungen ausgewählt werden, wobei die eine oder die mehreren Abfrageanweisungen einen oder mehrere Parameter zum Erzeugen von Merkmalsattributierungen angeben, die einem oder mehreren Merkmalswerten der Eingabedaten entsprechen;
Verarbeiten (420), durch den einen oder die mehreren Prozessoren, der Eingabedaten durch ein Maschinenlernmodell, um eine Modellausgabe zu erzeugen; und
Erzeugen (430), durch den einen oder die mehreren Prozessoren und unter Verwendung mindestens der Modellausgabe und des einen oder der mehreren Parameter der einen oder der mehreren Abfrageanweisungen, der Merkmalsattributierungen für die Eingabedaten;
wobei das Verfahren **dadurch gekennzeichnet ist, dass** der eine oder die mehreren Prozessoren Teil eines Netzwerks von verteilten Vorrichtungen sind, und dadurch, dass Erzeugen der Merkmalsattributierungen umfasst:
Starten, durch den einen oder die mehreren Prozessoren, eines lokalen Servers (360) auf derselben einen oder denselben mehreren verteilten Vorrichtungen des Netzwerks von verteilten Vorrichtungen, die den einen oder die mehreren Prozessoren hosten, nur wenn und jedes Mal beim Empfangen einer oder mehrerer Abfrageanweisungen und als Reaktion auf ein Bestimmen, dass die empfangene eine oder die empfangenen mehreren Abfrageanweisungen den einen oder die mehreren Parameter zum Erzeugen der Merkmalsattributierungen angeben;
Aufrechterhalten, durch den einen oder die mehreren Prozessoren, des lokalen Servers (360) in einem Speicher von einer oder mehreren Speichervorrichtungen, bis all die Eingabedaten, die unter Verwendung der einen oder der mehreren Abfrageanweisungen ausgewählt werden, empfangen und verarbeitet sind; und
Erzeugen, durch den einen oder die mehreren Prozessoren, der Merkmalsattributierungen unter Verwendung des lokalen Servers (360).

10. Verfahren nach Anspruch 9, wobei eine Merkmalsattributierung für einen jeweiligen Merkmalswert der Eingabedaten einem Wert entspricht, der den Grad an Kausalität des Merkmalswerts misst, der eine relative Änderung des Merkmalswerts mit einer relativen Änderung in dem Ausgabewert eines Werts der Modellausgabe in Beziehung setzt.

11. Verfahren nach Anspruch 9,
wobei das Verfahren ferner Trainieren des Maschinenlernmodells umfasst, und
wobei die eine oder die mehreren Abfrageanweisungen Daten zum Verarbeiten durch das trainierte Maschinenlernmodell auswählen, um eine oder mehrere Modellvorhersagen zu erzeugen.

12. Verfahren nach Anspruch 9,
wobei die Merkmalsattributierungen erste Merkmalsattributierungen sind; und
wobei das Verfahren ferner Folgendes umfasst:
Erzeugen, durch den einen oder die mehreren Prozessoren, von zweiten Merkmalsattributierungen für Trainingsdaten, die verwendet werden, um das Maschinenlernmodell zu trainieren;
Erzeugen, durch den einen oder die mehreren Prozessoren, von globalen Merkmalsattributierungen für das trainierte Maschinenlernmodell, wobei beim Erzeugen der globalen Merkmalsattributierungen der eine oder die mehreren Prozessoren konfiguriert sind, um die zweiten Merkmalsattributierungen zu aggregieren; und
Speichern, durch den einen oder die mehreren Prozessoren, in einer oder mehreren Speichervorrichtungen, der globalen Merkmalsattributierungen; und gegebenenfalls
wobei Erzeugen der ersten Merkmalsattributierungen Empfangen, durch den einen oder die mehreren Prozessoren, von zumindest einem Abschnitt der gespeicherten globalen Merkmalsattributierungen umfasst.

13. Ein oder mehrere nichtflüchtige computerlesbare Speichermedien, die mit Anweisungen codiert sind, die, wenn sie von einem oder mehreren Prozessoren ausgeführt werden, den einen oder die mehreren Prozessoren veranlassen, Operationen durchzuführen, die Folgendes umfassen:
Empfangen (410) von Eingabedaten, die unter Verwendung einer oder mehrerer Abfrageanweisungen ausgewählt werden, wobei die eine oder die mehreren Abfrageanweisungen einen oder mehrere Parameter zum Erzeugen von Merkmalsattributierungen angeben, die einem oder mehreren Merkmalswerten der Eingabedaten entsprechen;
Verarbeiten (420) der Eingabedaten durch ein Maschinenlernmodell, um eine Modellausgabe zu erzeugen; und
Erzeugen (430), unter Verwendung mindestens der Modellausgabe und des einen oder der mehreren Parameter der einen oder der mehreren Abfrageanweisungen, der Merkmalsattributierungen für die Eingabedaten;
wobei das eine oder die mehreren nichtflüchtigen computerlesbaren Medien **dadurch gekennzeichnet sind, dass** der eine oder die mehreren Prozessoren Teil eines Netzwerks von verteilten Vorrichtungen sind, und dadurch, dass Erzeugen der Merkmalsattributierungen umfasst:
Starten, durch den einen oder die mehreren Prozessoren, eines lokalen Servers (360) auf derselben einen oder denselben mehreren verteilten Vorrichtungen des Netzwerks von verteilten Vorrichtungen, die den einen oder die mehreren Prozessoren hosten, nur wenn und jedes Mal beim Empfangen einer oder mehrerer Abfrageanweisungen und als Reaktion auf ein Bestimmen, dass die empfangene eine oder die empfangenen mehreren Abfrageanweisungen den einen oder die mehreren Parameter zum Erzeugen der Merkmalsattributierungen angeben;
Aufrechterhalten, durch den einen oder die mehreren Prozessoren, des lokalen Servers (360) in einem Speicher von einer oder mehreren Speichervorrichtungen, bis all die Eingabedaten, die unter Verwendung der einen oder der mehreren Abfrageanweisungen ausgewählt werden, empfangen und verarbeitet sind; und
Erzeugen, durch den einen oder die mehreren Prozessoren, der Merkmalsattributierungen unter Verwendung des lokalen Servers (360).

14. Computerlesbare Speichermedien nach Anspruch 13, wobei, gegebenenfalls, eine Merkmalsattributierung für einen jeweiligen Merkmalswert der Eingabedaten einem Wert entspricht, der den Grad an Wichtigkeit misst, den der jeweilige Merkmalswert beim Erzeugen der Modellausgabe aufweist.

## Revendications

1. Système comprenant :
un ou plusieurs dispositifs de mémoire, et
un ou plusieurs processeurs, dans lequel le ou les processeurs sont configurés pour :
recevoir (410) des données d'entrée sélectionnées à l'aide d'une ou de plusieurs instructions de requête, la ou les instructions de requête spécifiant un ou plusieurs paramètres pour générer des attributions de caractéristiques correspondant à une ou plusieurs valeurs de caractéristiques des données d'entrée ;
traiter (420) les données d'entrée à travers un modèle d'apprentissage automatique pour générer une sortie de modèle ; et
générer (430), à l'aide au moins de la sortie de modèle et du ou des paramètres de la ou des instructions de requête, les attributions de caractéristiques pour les données d'entrée ;
le système étant **caractérisé en ce que** le ou les processeurs font partie d'un réseau de dispositifs distribués, et **en ce que**, lors de la génération des attributions de caractéristiques, le ou les processeurs sont en outre configurés pour :
lancer un serveur local (360) sur un ou plusieurs mêmes dispositifs distribués du réseau de dispositifs distribués, hébergeant le ou les processeurs, uniquement lors et à chaque réception d'une ou de plusieurs instructions de requête et en réponse à la détermination que la ou les instructions de requête reçues spécifient le ou les paramètres pour générer les attributions de caractéristiques ;
maintenir le serveur local (360) dans une mémoire du ou des dispositifs de mémoire jusqu'à ce que la totalité des données d'entrée sélectionnées à l'aide de la ou des instructions de requête soient reçues et traitées ; et
générer les attributions de caractéristiques à l'aide du serveur local (360).

2. Système selon la revendication 1, dans lequel une attribution de caractéristique pour une valeur de caractéristique respective des données d'entrée correspond à une valeur mesurant le degré de causalité de la valeur de caractéristique reliant un changement relatif de la valeur de caractéristique à un changement relatif dans une valeur de la sortie de modèle.

3. Système selon la revendication 1, dans lequel le ou les paramètres spécifient une ou plusieurs fonctions d'explicabilité de modèle, et dans lequel, lors de la génération des attributions de caractéristiques à l'aide du serveur local, le ou les processeurs sont en outre configurés pour :
traiter les parties respectives des données d'entrée à l'aide de chacune de la ou des fonctions d'explicabilité de modèle pour générer les attributions de caractéristiques.

4. Système selon la revendication 1,
dans lequel, lors du traitement des données d'entrée à travers le modèle d'apprentissage automatique, le ou les processeurs initialisent un premier processus ; et
dans lequel le ou les processeurs sont en outre configurés pour lancer un sous-processus à partir du premier processus afin de lancer le serveur local et de générer les attributions de caractéristiques ; et éventuellement
dans lequel la ou les instructions de requête sont une ou plusieurs premières instructions de requête et les attributions de caractéristiques sont de premières attributions de caractéristiques ; et
dans lequel le ou les processeurs sont en outre configurés pour :
recevoir une ou plusieurs secondes instructions de requête ;
déterminer, à partir de la ou des secondes instructions de requête, que la ou les secondes instructions de requête comprennent un ou plusieurs seconds paramètres pour générer de secondes attributions de caractéristiques ; et
lancer le sous-processus à partir du premier processus pour lancer le serveur local et générer les secondes attributions de caractéristiques en réponse à la détermination que la ou les secondes instructions de requête comprennent le ou les seconds paramètres pour générer les secondes attributions de caractéristiques.

5. Système selon la revendication 1,
dans lequel les données d'entrée comprennent une ou plusieurs entrées, chaque entrée correspondant à une ligne d'une base de données stockée sur le ou les dispositifs de mémoire sélectionnés à l'aide de la ou des instructions de requête ; et/ou
dans lequel les données d'entrée sont des données d'entraînement ou des données de validation utilisées pour entraîner le modèle d'apprentissage automatique ; et/ou
dans lequel la ou les instructions de requête sont une ou plusieurs instructions en langage de requête structuré, SQL.

6. Système selon la revendication 1,
dans lequel le ou les processeurs sont en outre configurés pour entraîner le modèle d'apprentissage automatique, et
dans lequel la ou les instructions de requête sélectionnent des données à traiter à travers le modèle d'apprentissage automatique entraîné afin de générer une ou plusieurs prédictions de modèle.

7. Système selon la revendication 1,
dans lequel les attributions de caractéristiques sont de premières attributions de caractéristiques ; et
dans lequel le ou les processeurs sont en outre configurés pour :
générer de secondes attributions de caractéristiques pour les données d'entraînement utilisées pour entraîner le modèle d'apprentissage automatique ;
générer des attributions de caractéristiques globales pour le modèle d'apprentissage automatique entraîné, dans lequel, lors de la génération des attributions de caractéristiques globales, le ou les processeurs sont configurés pour agréger les secondes attributions de caractéristiques ; et
stocker, dans le ou les dispositifs de mémoire, les attributions de caractéristiques globales ; et
dans lequel, lors de la génération des premières attributions de caractéristiques, le ou les processeurs sont configurés pour recevoir au moins une partie des attributions de caractéristiques globales stockées.

8. Système selon la revendication 1, dans lequel le ou les processeurs sont en outre configurés pour délivrer en sortie les attributions de caractéristiques pour affichage sur un dispositif d'affichage couplé au ou aux processeurs.

9. Procédé mis en œuvre par ordinateur comprenant :
la réception (410), par un ou plusieurs processeurs, de données d'entrée sélectionnées à l'aide d'une ou de plusieurs instructions de requête, la ou les instructions de requête spécifiant un ou plusieurs paramètres pour générer les attributions de caractéristiques correspondant à une ou plusieurs valeurs de caractéristiques des données d'entrée ;
le traitement (420), par le ou les processeurs, des données d'entrée à travers un modèle d'apprentissage automatique pour générer une sortie de modèle ; et
la génération (430), par le ou les processeurs et à l'aide au moins de la sortie de modèle et du ou des paramètres de la ou des instructions de requête, des attributions de caractéristiques pour les données d'entrée ;
le procédé étant **caractérisé en ce que** le ou les processeurs font partie d'un réseau de dispositifs distribués, et **en ce que** la génération des attributions de caractéristiques comprend :
le lancement, par le ou les processeurs, d'un serveur local (360) sur un ou plusieurs mêmes dispositifs distribués du réseau de dispositifs distribués, hébergeant le ou les processeurs, uniquement lors et à chaque réception d'une ou de plusieurs instructions de requête et en réponse à la détermination que la ou les instructions de requête reçues spécifient le ou les paramètres pour générer les attributions de caractéristiques ;
le maintien, par le ou les processeurs, du serveur local (360) dans une mémoire d'un ou de plusieurs dispositifs de mémoire jusqu'à ce que la totalité des données d'entrée sélectionnées à l'aide de la ou des instructions de requête soient reçues et traitées ; et
la génération, par le ou les processeurs, des attributions de caractéristiques à l'aide du serveur local (360).

10. Procédé selon la revendication 9, dans lequel une attribution de caractéristique pour une valeur de caractéristique respective des données d'entrée correspond à une valeur mesurant le degré de causalité de la valeur de caractéristique reliant un changement relatif de la valeur de caractéristique à un changement relatif dans la valeur de sortie, une valeur, de la sortie de modèle.

11. Procédé selon la revendication 9,
dans lequel le procédé comprend en outre l'entraînement du modèle d'apprentissage automatique, et
dans lequel la ou les instructions de requête sélectionnent des données à traiter à travers le modèle d'apprentissage automatique entraîné afin de générer une ou plusieurs prédictions de modèle.

12. Procédé selon la revendication 9,
dans lequel les attributions de caractéristiques sont les premières attributions de caractéristiques ; et
dans lequel le procédé comprend en outre :
la génération, par le ou les processeurs, de secondes attributions de caractéristiques pour les données d'entraînement utilisées pour entraîner le modèle d'apprentissage automatique ;
la génération, par le ou les processeurs, des attributions de caractéristiques globales pour le modèle d'apprentissage automatique entraîné, dans lequel, lors de la génération des attributions de caractéristiques globales, le ou les processeurs sont configurés pour agréger les secondes attributions de caractéristiques ; et
le stockage, par le ou les processeurs, dans un ou plusieurs dispositifs de mémoire, des attributions de caractéristiques globales ; et éventuellement
dans lequel la génération des premières attributions de caractéristiques comprend la réception, par le ou les processeurs, d'au moins une partie des attributions de caractéristiques globales stockées.

13. Un ou plusieurs supports de stockage non transitoires lisibles par ordinateur codés avec des instructions qui, lorsqu'elles sont exécutées par un ou plusieurs processeurs, amènent le ou les processeurs à réaliser des opérations comprenant :
la réception (410) de données d'entrée sélectionnées à l'aide d'une ou de plusieurs instructions de requête, la ou les instructions de requête spécifiant un ou plusieurs paramètres pour générer les attributions de caractéristiques correspondant à une ou plusieurs valeurs de caractéristiques des données d'entrée ;
le traitement (420) des données d'entrée à travers un modèle d'apprentissage automatique pour générer une sortie de modèle ; et
la génération (430), à l'aide au moins de la sortie de modèle et du ou des paramètres de la ou des instructions de requête, des attributions de caractéristiques pour les données d'entrée ;
le ou les supports non transitoires lisibles par ordinateur étant **caractérisés en ce que** le ou les processeurs font partie d'un réseau de dispositifs distribués, et **en ce que** la génération des attributions de caractéristiques comprend :
le lancement, par le ou les processeurs, d'un serveur local (360) sur un ou plusieurs mêmes dispositifs distribués du réseau de dispositifs distribués, hébergeant le ou les processeurs, uniquement lors et à chaque réception d'une ou de plusieurs instructions de requête et en réponse à la détermination que la ou les instructions de requête reçues spécifient le ou les paramètres pour générer les attributions de caractéristiques ;
le maintien, par le ou les processeurs, du serveur local (360) dans une mémoire d'un ou de plusieurs dispositifs de mémoire jusqu'à ce que la totalité des données d'entrée sélectionnées à l'aide de la ou des instructions de requête soient reçues et traitées ; et
la génération, par le ou les processeurs, des attributions de caractéristiques à l'aide du serveur local (360).

14. Supports de stockage lisible par ordinateur selon la revendication 13, dans lequel, éventuellement, une attribution de caractéristique pour une valeur de caractéristique respective des données d'entrée correspond à une valeur mesurant le degré d'importance que présente la valeur de caractéristique respective dans la génération de la sortie de modèle.
